# EUROPÄISCHE PATENTANMELDUNG

(11) **EP 3 135 523 A1**
(43) Veröffentlichungstag der Anmeldung: **01.03.2017**
(21) Anmeldenummer: 16180264.0
(22) Anmeldetag: 20.07.2016
(51) Int. Cl.: B60K 15/01, F16L 25/01, B60K 15/04, B60K 15/03

(54) **ROHRVERBINDER ZUM ANSCHLIESSEN EINER KRAFTSTOFFLEITUNG EINER KRAFTSTOFFVERSORGUNG FÜR EINEN KRAFTFAHRZEUGMOTOR**

(30) Priorität: 21.08.2015 DE 102015113896
(71) Anmelder: Dr. Ing. h.c. F. Porsche AG, 70435 Stuttgart (DE); Magna Steyr Fuel Systems GesmbH, 8261 Sinabelkirchen (AT)
(72) Erfinder: Podewski, Kai, 75181 Pforzheim (DE); Krezer, Armin, 74182 Obersulm (DE); Gschanes, Bernhard, 8200 Gleisdorf (AT); Schinnerl, Michael, 8061 St. Radegund (AT)
(74) Vertreter: Sturm, Christoph

(57) **Zusammenfassung**

Es ist ein Rohrverbinder (10) zum Anschließen einer Kraftstoffleitung (26) einer Kraftstoffversorgung für einen Kraftfahrzeugmotor eines Kraftfahrzeugs, mit einem mit der Kraftstoffleitung (26) verbindbaren Adapterstück (12) zum Einstecken in ein Kraftstoffrohr (32) und einer in dem Adapterstück (12) eingesteckten Stützhülse (16) zur elektrischen Kontaktierung der Kraftstoffleitung (26) mit dem Kraftstoffrohr (32), wobei die Stützhülse (16) in einem Teilbereich eine aus einer Mantelebene der Stützhülse (16) heraus verlaufende Anschlaglasche (18) zum axialen Anschlagen an dem Adapterstück (12) aufweist. Durch die aus der Mantelebene heraus verlaufende Anschlaglasche (18) kann ohne eine zusätzliche Materialanhäufung die Einstecktiefe der kostengünstig herstellbaren Stützhülse (16) in dem Adapterstück (12) mit geringem Montageaufwand vorgegeben werden, so dass ein kostengünstiger Anschluss einer Kraftstoffleitung (26) für einen Kraftfahrzeugmotor ermöglicht ist.

## Beschreibung

Die Erfindung betrifft einen Rohrverbinder, mit dessen Hilfe eine Kraftstoffleitung als Teil einer Kraftstoffversorgung an einen Kraftfahrzeugmotor eines Kraftfahrzeugs angeschlossen werden kann.

Aus EP 2 799 273 A1 ist ein Tanksystem bekannt, bei dem ein Einfüllrohr mit einem Einfüllschlauch dadurch verbunden ist, dass in dem Einfüllrohr eine zylindrische aus einem elektrisch leitfähigen Kunststoffmaterial hergestellte Stützhülse eingeschoben ist, deren Einstecktiefe durch eine von dem Außenmantel der zylindrischen Stützhülse nach radial außen abstehende Stützrippe begrenzt wird. Zusätzlich stehen von dem Außenmantel der zylindrischen Stützhülse Laschen ab, welche von radial innen her außerhalb des Einfüllrohrs an dem Einfüllschlauch anliegen. Der in dem Einfüllrohr eingesteckte Teil der Stützhülse ist rein zylindrisch ausgeformt.

Es besteht ein ständiges Bedürfnis möglichst kostengünstig eine Kraftstoffleitung für einen Kraftfahrzeugmotor anschließen zu können.

Es ist die Aufgabe der Erfindung Maßnahmen aufzuzeigen, die einen kostengünstigen Anschluss einer Kraftstoffleitung für einen Kraftfahrzeugmotor ermöglichen.

Die Lösung der Aufgabe erfolgt erfindungsgemäß durch einen Rohrverbinder mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Rohrverbinder zum Anschließen einer Kraftstoffleitung einer Kraftstoffversorgung für ein Kraftfahrzeugmotor eines Kraftfahrzeugs vorgesehen mit einem mit der Kraftstoffleitung verbindbaren Adapterstück zum Einstecken in ein Kraftstoffrohr und einer in dem Adapterstück eingesteckten Stützhülse zur elektrischen Kontaktierung der Kraftstoffleitung mit dem Kraftstoffrohr, wobei die Stützhülse in einem Teilbereich eine aus einer Mantelebene der Stützhülse heraus verlaufende Anschlaglasche zum axialen Anschlagen an dem Adapterstück aufweist.

Die Stützhülse kann das Adapterstück von radial innen her abstützen, wenn das Adapterstück mit dem Kraftstoffrohr verbunden wird. Beispielsweise kann das Adapterstück aus einem Kunststoffmaterial hergestellt sein, das ansonsten nach radial innen nachgeben könnte, wenn das Adapterstück mit einem Spannring, einer Sicherungsspange einer angezogenen Überwurfmutter oder sonstigen von radial außen her eine Klemmkraft auf das Adapterstück ausübenden Befestigungsmittel mit dem Kraftstoffrohr befestigt und/oder gegen Abrutschen gesichert wird. Die Stützhülse kann dadurch eine sichere und dichte Verbindung des Adapterstücks mit dem Kraftstoffrohr sicherstellen.

Die Stützhülse kann insbesondere durch das Adapterstück hindurchragen und an den axialen Enden des Adapterstücks aus dem Adapterstück herausragen. Dadurch kann die Stützhülse im montierten Zustand mit einem ersten Ende an der Kraftstoffleitung und mit einem zweiten Ende an dem Kraftstoffrohr anliegen. Die Stützhülse kann hinreichend elektrisch leitfähig sein, um eine elektrostatische Aufladung der Kraftstoffleitung und des Kraftstoffrohrs durch den hindurchströmenden Kraftstoff abzubauen und eine elektrostatische Entzündung von gasförmigen Kraftstoff zu verhindern. Die Stützhülse kann hierzu beispielsweise aus einem metallischen Material, beispielsweise ein Stahlblech, hergestellt sein. Zumindest über die an der Stirnseite des Adapterstücks anschlagende Anschlaglasche kann auch eine elektrische Kontaktierung des Adapterstücks erfolgen, um eine elektrostatische Aufladung des Adapterstücks zu vermeiden. Dies ermöglicht es das Adapterstück ohne eine ausreichende elektrisch leitfähige Kontaktierung mit der Kraftstoffleitung und/oder mit dem Kraftstoffrohr interagieren zu lassen, da die elektrische Kontaktierung über die Stützhülse erfolgen kann. Dies ermöglicht zusätzliche konstruktive Freiheiten bei der Gestaltung der Anbindung des Adapterstücks mit der Kraftstoffleitung und dem Kraftstoffrohr, die ein kostengünstiges Design ermöglichen. Beispielsweise könnte das Adapterstück nur über elektrisch nicht leitende Dichtelemente an dem Kraftstoffrohr angreifen, so dass konstruktive Maßnahmen für eine direkte elektrische Kontaktierung des Adapterstücks mit dem Kraftstoffrohr eingespart werden können.

Durch die an der Stirnseite des Adapterstücks anschlagende Anschlaglasche kann die Einstecktiefe der Stützhülse in das Adapterstück genau vorgeben werden. Dadurch kann insbesondere genau vorgegeben werden, wie weit die Stützhülse in axialer Richtung aus dem Adapterstück herausragt, so dass eine sichere Kontaktierung der Kraftstoffleitung und des Kraftstoffrohrs gegeben ist. Zur Ausbildung der Anschlaglasche ist die Anschlaglasche aus dem Material der insbesondere in der Grundform im Wesentlichen zylindrischen Stützhülse nach radial außen heraus verlaufend ausgestaltet. Das heißt, dass in einem Teilbereich der im Wesentlichen zylindrischen Stützhülse das ansonsten die Mantelfläche ausbildende Material der Stützhülse zur Ausbildung der Anschlaglasche verwendet wird und stattdessen soweit nach radial außen absteht, dass die so ausgebildete Anschlaglasche bei einem Einstecken der Stützhülse in das Adapterstück an einer axialen Stirnfläche des Adapterstücks anschlägt. Eine Materialhäufung der Stützhülse, wie sie beispielsweise durch eine angeformte Rippe gegeben wäre, ist dadurch vermieden, so dass mit einem geringeren Materialeinsatz die Stützhülse ausgebildet werden kann, wodurch Herstellungskosten reduziert werden können. Insbesondere ist es möglich die Stützhülse kostengünstig aus einem Flachmaterial, beispielsweise ein Metallblech, kostengünstig herzustellen und hierbei die Anschlaglasche aus dem Material der Stützhülse teilweise auszustanzen und aus der Mantelebene der Stützhülse herauszubiegen. Durch die aus der Mantelebene heraus verlaufende Anschlaglasche kann ohne eine zusätzliche Materialanhäufung die Einstecktiefe der kostengünstig herstellbaren Stützhülse in dem Adapterstück mit geringem Montageaufwand vorgegeben werden, so dass ein kostengünstiger Anschluss einer Kraftstoffleitung für einen Kraftfahrzeugmotor ermöglicht ist.

Die Mantelebene der Stützhülse wird durch die in Umfangsrichtung verlaufende Mantelfläche des im Wesentlichen zylindrischen Teils der Stützhülse definiert, der radial innerhalb des Adapterstücks von dem Adapterstück in radialer Richtung überdeckt wird. Die aus der Mantelebene heraus verlaufende Anschlaglasche hinterlässt in der Wandstärke der Stützhülse eine zu der Anschlaglasche korrespondierende Vertiefung oder Öffnung, die von der Anschlaglasche zumindest zu einem Großteil ausgefüllt werden könnte, wenn die Anschlaglasche in diese Vertiefung oder Öffnung hinein bewegt werden könnte. Insbesondere kann die Anschlaglasche entgegen einer von der Anschlaglasche aufgebrachten Federkraft in die Mantelebene der Stützhülse von radial außen her hineingedrückt werden. Die Anschlaglasche kann dadurch als Schnappverschluss wirken, der in einer ersten Axialrichtung in das Adapterstück eingesteckt werden kann und nach einem durch die Federkraft bedingten Hochschnappen nach radial außen eine Bewegung der Stützhülse entgegen der ersten Axialrichtung formschlüssig sperren kann. Mit Hilfe der Anschlaglasche kann dadurch eine Verliersicherung ausgebildet werden. Es ist auch möglich die Stützhülse entgegen der ersten Axialrichtung entlang einer zweiten Axialrichtung in das Adapterstück einzustecken bis die Anschlaglasche an dem Adapterstück formschlüssig anschlägt und eine weitere Relativbewegung der Stützhülse entlang der zweiten Axialrichtung relativ zum Adapterstück sperrt.

Insbesondere weist die Stützhülse eine im Wesentlichen konstante Wandstärke auf. Die Stützhülse kann dadurch leicht aus einem kostengünstigen Flachmaterial hergestellt werden, das insbesondere als Endlosmaterial bereitgestellt werden kann. Unnötige Materialhäufungen, für deren Herstellung beispielsweise ein Spritzgussverfahren mit einer entsprechen teuren Negativform erforderlich ist, können dadurch vermieden werden.

Vorzugsweise ist die Anschlaglasche aus der Mantelebene der Stützhülse herausgebogen. Die Anschlaglasche kann dadurch kostengünstig hergestellt werden, indem die Anschlaglasche teilweise aus dem Material der Mantelebene der Stützhülse ausgestanzt und durch eine nachfolgende plastische Verformung aus der Mantelebene herausgebogen wird.

Besonders bevorzugt liegt die Anschlaglasche an einer von der Kraftstoffleitung weg weisenden Stirnseite des Adapterstücks an, wobei die Anschlaglasche in axialer Richtung außerhalb des Adapterstücks, insbesondere innerhalb des Kraftstoffrohrs, mit der übrigen Stützhülse verbunden ist. Die Anschlaglasche ist dadurch selbstverstärkend. Wenn die Anschlaglasche mit einer erhöhten Kraft gegen die Stirnseite des Adapterstücks gepresst wird, wird sich die Anschlaglasche nur noch weiter aufstellen und dadurch erst recht einen Widerstand entgegensetzen.

Insbesondere weist die Stützhülse in einem Teilbereich eine aus einer Mantelebene der Stützhülse heraus verlaufende Konteranschlaglasche zum axialen Anschlagen an dem Adapterstück in einer zur Anschlaglasche entgegen gerichteten Richtung und/oder zum Aufbringen einer radialen Klemmkraft auf eine Innenseite des Adapterstücks auf. Die Konteranschlaglasche kann formschlüssig und/oder reibschlüssig einen Widerstand gegen eine Relativbewegung der Stützhülse in dem Adapterstück in eine Richtung bereitstellen, die von der Anschlaglasche nicht gesperrt wird. Beispielsweise kann die Konteranschlaglasche Teil einer Rastverbindung vergleichbar zu einem Kabelbinder sein, wodurch die Stützhülse verliersicher in einer definierten Relativlage in dem Adapterstück eingesetzt sein kann. Der Konteranschlag kann vergleichbar, insbesondere spiegelbildlich, zu der Anschlaglasche ausgestaltet sein.

Vorzugsweise greift die Konteranschlaglasche radial innerhalb des Adapterstücks an dem Adapterstück an. Die Konteranschlaglasche kann beispielsweise innerhalb des Adapterstücks in eine Vertiefung, beispielsweise eine in Umfangsrichtung umlaufende Ringnut, einschnappen. Da die Konteranschlaglasche dadurch nicht an der zur Kraftstoffleitung weisenden Stirnseite des Adapterstücks anliegt, ist es möglich diese Stirnseite anderweitig, insbesondere zur Befestigung mit der Kraftstoffleitung zu verwenden.

Besonders bevorzugt ist die Anschlaglasche und/oder die Konteranschlaglasche in eine korrespondierende Aufnahmetasche des Adapterstücks zur Ausbildung einer Verdrehsicherung eingesetzt. Die Aufnahmetasche kann auch in Umfangsrichtung wirkende Anschläge ausbilden, so dass auch eine Relativdrehung der Stützhülse in dem Adapterstück formschlüssig gesperrt ist.

Insbesondere ist die Stützhülse aus einem metallischen Material, insbesondere einem Metallblech, hergestellt. Die Stützhülse weist dadurch eine gute elektrische Leitfähigkeit auf. Zudem kann die Anschlaglasche leicht und kostengünstig durch Ausstanzen und plastisches Umformen hergestellt werden.

Vorzugsweise weist die Stützhülse mindestens ein erstes Federbein zur federnden Kontaktierung der Kraftstoffleitung von radial innen her und/oder mindestens ein zweites Federbein zur federnden Kontaktierung des Kraftstoffrohrs von radial innen her auf, wobei zur Ausformung des ersten Federbeins die Stützhülse an ihrem zur Kraftstoffleitung weisenden ersten Ende in axialer Richtung verlaufende erste Schlitze und/oder zur Ausformung des zweiten Federbeins die Stützhülse an ihrem zum Kraftstoffrohr weisenden zweiten Ende in axialer Richtung verlaufende zweite Schlitze aufweist. Das Federbein kann mit einer Federkraft von radial innen her an der Innenseite der Kraftstoffleitung beziehungsweise des Kraftstoffrohrs anliegen und dadurch einen elektrischen Kontakt sicherstellen. Insbesondere ist das Federbein an seinem abstehenden Ende nach radial außen ausgebeult, so dass sich eine Einführungsfase ergibt, die das Einstecken des Federbeins in die Kraftstoffleitung beziehungsweise in das Kraftstoffrohr erleichtert. Zudem kann durch den gerundeten Verlauf des ausgebeulten Bereichs des Federbeins auch bei Fluchtungstoleranzen ein elektrischer Kontakt hergestellt werden.

Besonders bevorzugt ist das Adapterstück mit der Kraftstoffleitung, insbesondere mittelbar über einen aus einem Kunststoffmaterial hergestellten Schweißring, verschweißt, wobei die Kraftstoffleitung und das Adapterstück ein Kunststoffmaterial aufweisen. Der Schweißring kann beispielsweise aus Polyethylen, insbesondere HDPE, hergestellt sein. Das Adapterstück kann beispielsweise aus glasfaserverstärktem Polyamid hergestellt sein. Die Kraftstoffleitung kann aus einem Kunststoff, beispielsweise PE, hergestellt sein. Es ist möglich das Adapterstück mit der eingesetzten Stützhülse mit der Kraftstoffleitung zu verschweißen oder die Stützhülse erst nach dem Schweißen einzusetzen. Dadurch, dass das Adapterstück als separates Teil mit der Kraftstoffleitung verbunden ist, kann das Adapterstück als Gleichteil an unterschiedlichen Stellen der Krafststoffversorgung des Kraftfahrzeugs eingesetzt werden und/oder für unterschiedliche Kraftstoffleitung von unterschiedlichen Kraftfahrzeugmodellen verwendet werden. Die Herstellungskosten können dadurch gering gehalten werden.

Die Erfindung betrifft ferner ein Rohrverbindungssystem zur Kraftstoffversorgung eines Kraftfahrzeugmotors, mit einem Rohrverbinder, der wie vorstehend beschrieben aus- und weitergebildet sein kann, und einem aus einem metallischen Material hergestellten Kraftstoffrohr, wobei das Adapterstück in dem Kraftstoffrohr eingesetzt ist. Durch die aus der Mantelebene heraus verlaufende Anschlaglasche der Stützhülse des Rohrverbinders kann ohne eine zusätzliche Materialanhäufung die Einstecktiefe der kostengünstig herstellbaren Stützhülse in dem Adapterstück mit geringem Montageaufwand vorgegeben werden, so dass ein kostengünstiger Anschluss einer Kraftstoffleitung für einen Kraftfahrzeugmotor ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Draufsicht eines Teils eines Rohrverbinders und
Fig. 2: eine schematische Schnittansicht eines Rohrverbindungssystems mit dem Rohrverbinder aus Fig. 1.

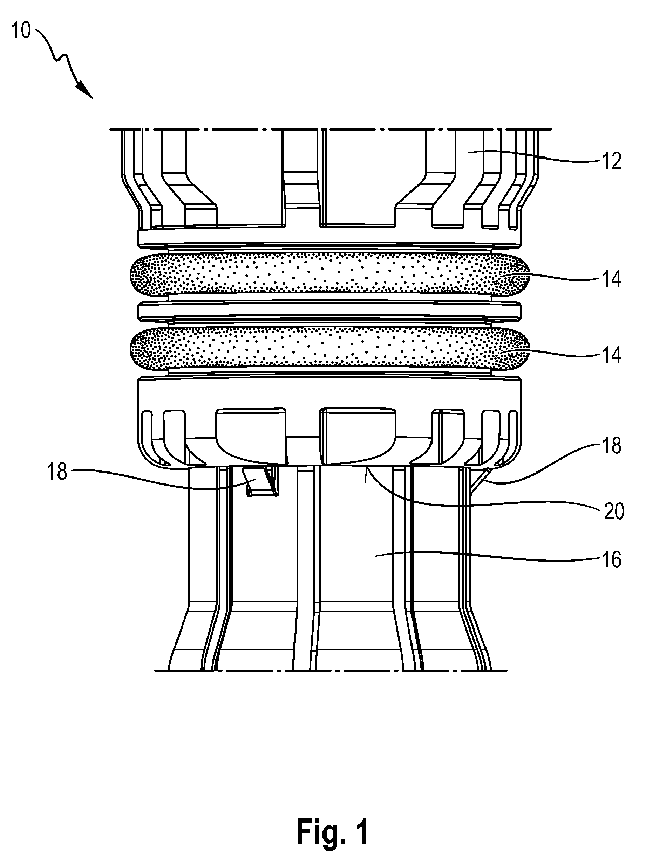

Der in Fig. 1 dargestellte Rohrverbinder 10 weist ein Adapterstück 12 auf, in das beispielsweise zwei Dichtringe 14 eingelassen sind. In das Adapterstück 12 ist eine Stützhülse 16 eingesteckt. Aus einer Mantelebene der Stützhülse 16 sind Anschlaglaschen 18 herausgebogen, die an einer Stirnseite 20 des Adapterstücks 12 anschlagen. In dem dargestellten Ausführungsbeispiel fällt die Stirnseite 20 mit einem axialen Abschluss des Adapterstücks 12 zusammen. Es ist auch möglich, dass die Anschlaglaschen 18 in korrespondierende Aufnahmetaschen des Adapterstücks 12 eingreifen, um zusätzlich eine Verdrehsicherung auszubilden. Die Anschlaglaschen 18 sind außerhalb des Adapterstücks 12 mit der übrigen aus einem Metallblech hergestellten Stützhülse 16 verbunden, so dass ein weiteres Einstecken der Stützhülse 16 in das Adapterstück 12 sicher vermieden werden kann.

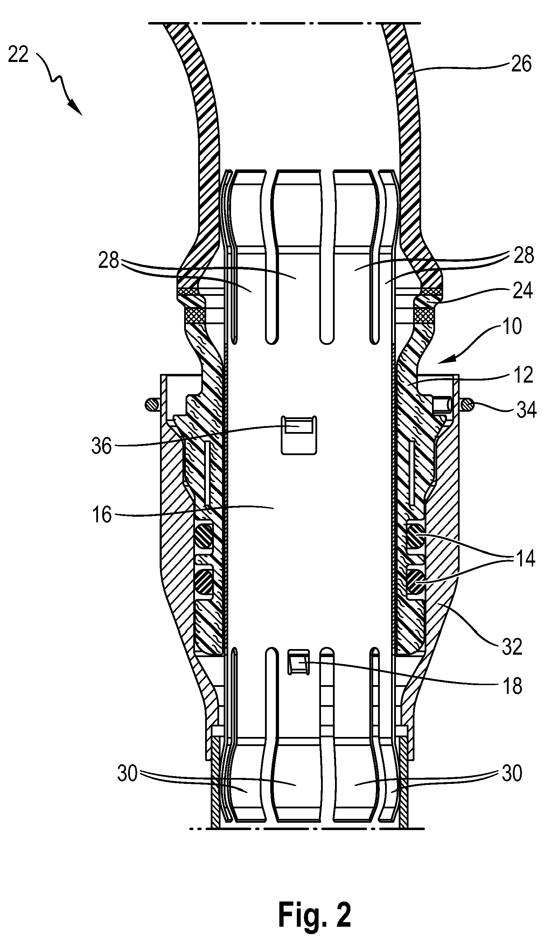

Wie bei dem in Fig. 2 dargestellten Rohrverbindungssystem 22 dargestellt, kann das Adapterstück 12 über einen Schweißring 24 mit einer Kraftstoffleitung 26 aus Kunststoff verschweißt sein. Die Stützhülse 16 weist durch axial verlaufende Schlitze in Umfangsrichtung voneinander getrennte erste Federbeine 28 auf, die mit einer Federkraft von radial innen her an einer Innenseite der Kraftstoffleitung 26 anliegen und eine elektrische Kontaktierung herstellen. Entsprechend weist die Stützhülse 16 an ihrem anderen Ende durch axial verlaufende Schlitze in Umfangsrichtung voneinander getrennte zweite Federbeine 30 auf, die mit einer Federkraft von radial innen her an einer Innenseite eines Kraftstoffrohrs 32 anliegen und eine elektrische Kontaktierung herstellen.

Das Adapterstück 12 ist in dem Kraftstoffrohr 32 eingesteckt, an dem die Kraftstoffleitung 26 über den Rohrverbinder 10 angeschlossen werden soll. Das Adapterstück ist über die Dichtringe 14 zum Kraftstoffrohr 32 abgedichtet. Mit Hilfe einer Sicherungsspange 34 ist das Kraftstoffrohr 32 mit dem Adapterstück 12 verpresst, so dass der Rohrverbinder 10 auch bei einem erhöhten Innendruck bei der Förderung von Kraftstoff nicht aus dem Kraftstoffrohr 32 unabsichtlich herausrutscht.

Insbesondere ist die jeweilige Anschlaglasche 18 aus einem zugeordneten zweiten Federbein 30 herausgebogen. Vorzugsweise ist zusätzlich eine Konteranschlaglasche 36 aus der Mantelebene der Stützhülse 16 herausgebogen. Die Konteranschlaglasche 36 steht innerhalb des Adapterstücks 12 nach radial außen ab und kann kraftschlüssig und/oder formschlüssig mit dem Adapterstück 12 zusammenwirken, so dass durch die Anschlaglasche und die Konteranschlaglasche 36 beide axiale Relativbewegungsrichtungen der Stützhülse 16 relativ zum Adapterstück gesperrt werden können.

## Patentansprüche

1. Rohrverbinder zum Anschließen einer Kraftstoffleitung (26) einer Kraftstoffversorgung für ein Kraftfahrzeugmotor eines Kraftfahrzeugs, mit
einem mit der Kraftstoffleitung (26) verbindbaren Adapterstück (12) zum Einstecken in ein Kraftstoffrohr (32) und
einer in dem Adapterstück (12) eingesteckten Stützhülse (16) zur elektrischen Kontaktierung der Kraftstoffleitung (26) mit dem Kraftstoffrohr (32),
wobei die Stützhülse (16) in einem Teilbereich eine aus einer Mantelebene der Stützhülse (16) heraus verlaufende Anschlaglasche (18) zum axialen Anschlagen an dem Adapterstück (12) aufweist.

2. Rohrverbinder nach Anspruch 1 **dadurch gekennzeichnet, dass** die Stützhülse (16) eine im Wesentlichen konstante Wandstärke aufweist.

3. Rohrverbinder nach Anspruch 1 oder 2 **dadurch gekennzeichnet, dass** die Anschlaglasche (18) aus der Mantelebene der Stützhülse (16) herausgebogen ist.

4. Rohrverbinder nach einem der Ansprüche 1 bis 3 **dadurch gekennzeichnet, dass** die Anschlaglasche (18) an einer von der Kraftstoffleitung (26) weg weisenden Stirnseite (20) des Adapterstücks (12) anliegt, wobei die Anschlaglasche (18) in axialer Richtung außerhalb des Adapterstücks (12), insbesondere innerhalb des Kraftstoffrohrs (32), mit der übrigen Stützhülse (16) verbunden ist.

5. Rohrverbinder nach einem der Ansprüche 1 bis 4 **dadurch gekennzeichnet, dass** die Stützhülse (16) in einem Teilbereich eine aus einer Mantelebene der Stützhülse (16) heraus verlaufende Konteranschlaglasche (36) zum axialen Anschlagen an dem Adapterstück (12) in einer zur Anschlaglasche (18) entgegen gerichteten Richtung und/oder zum Aufbringen einer radialen Klemmkraft auf eine Innenseite des Adapterstücks (12) aufweist.

6. Rohrverbinder nach Anspruch 5 **dadurch gekennzeichnet, dass** die Konteranschlaglasche (36) radial innerhalb des Adapterstücks (12) an dem Adapterstück (12) angreift.

7. Rohrverbinder nach einem der Ansprüche 1 bis 6 **dadurch gekennzeichnet, dass** die Anschlaglasche (18) und/oder die Konteranschlaglasche (36) in eine korrespondierende Aufnahmetasche des Adapterstücks (12) zur Ausbildung einer Verdrehsicherung eingesetzt ist.

8. Rohrverbinder nach einem der Ansprüche 1 bis 7 **dadurch gekennzeichnet, dass** die Stützhülse (16) aus einem metallischen Material, insbesondere einem Metallblech, hergestellt ist.

9. Rohrverbinder nach einem der Ansprüche 1 bis 8 **dadurch gekennzeichnet, dass** die Stützhülse (16) mindestens ein erstes Federbein (28) zur federnden Kontaktierung der Kraftstoffleitung (26) von radial innen her und/oder mindestens ein zweites Federbein (30) zur federnden Kontaktierung des Kraftstoffrohrs (32) von radial innen her aufweist, wobei zur Ausformung des ersten Federbeins (28) die Stützhülse (16) an ihrem zur Kraftstoffleitung (26) weisenden ersten Ende in axialer Richtung verlaufende erste Schlitze und/oder zur Ausformung des zweiten Federbeins (30) die Stützhülse (16) an ihrem zum Kraftstoffrohr (32) weisenden zweiten Ende in axialer Richtung verlaufende zweite Schlitze aufweist.

10. Rohrverbinder nach einem der Ansprüche 1 bis 9 **dadurch gekennzeichnet, dass** das Adapterstück (12) mit der Kraftstoffleitung (26), insbesondere mittelbar über einen aus einem Kunststoffmaterial hergestellten Schweißring (24), verschweißt ist, wobei die Kraftstoffleitung (26) und das Adapterstück (12) ein Kunststoffmaterial aufweisen.
